# EUROPEAN PATENT APPLICATION

(11) **EP 1 477 918 A2**
(43) Date of publication of application: **17.11.2004**
(21) Application number: 04010694.0
(22) Date of filing: 05.05.2004
(51) Int. Cl.: G06F 17/60

(54) **Advertising method using mobile terminal, mobile terminal advertising system and mobile terminal**

(30) Priority: 09.05.2003 JP 2003132383
(71) Applicant: NEC CORPORATION, Tokyo (JP)
(72) Inventor: Nioshimura, Tomotsune, Minato-ku Tokyo (JP)
(74) Representative: Glawe, Delfs, Moll & Partner

(57) **Abstract**

An object is to improve the effect of advertising display using the display unit in the rear display unit of a mobile terminal. An advertiser transmits advertising contents from a contents server to a portable telephone. A user displays the advertising contents on the display unit in the rear face and the like of the portable telephone in public places and the like so as to advertise the contents to a third party. The advertiser shares a part of the communication fee for compensating the user for displaying the advertisement.

## Description

### DETAILED DESCRIPTION OF THE INVENTION

### 1. Field of the Invention

The present invention relates to an advertising method which displays advertisement using a mobile terminal, e.g., a portable telephone, as an advertising medium, a mobile terminal advertising system and a mobile terminal.

### 2. Description of the Related Art

Users of portable telephones have been increasing year after year and those types with a display unit on their rear faces tend to be rapidly increasing. Advertising methods for displaying advertisement on the rear face are disclosed in Japanese Unexamined Patent Publication No. 2001-211270, Japanese Unexamined Patent Publication No. 2000-186575, Japanese Unexamined Patent Publication No. 2001-309443, Japanese Unexamined Patent Publication No. 2002-182828, Japanese Unexamined Patent Publication No. 2002-216021 and Japanese Unexamined Patent Publication No. 2002-2470-45.

In the technique disclosed in Japanese Unexamined Patent Publication No. 2001-211270, an advertising display section is provided in a part of display unit and advertisement contents are displayed in the advertising display section. Also, the technique disclosed in Japanese Unexamined Patent Publication No. 2002-182828 is to perform advertisement display using a display unit in a rear face of a mobile terminal.

A fold-type portable telephone comprises, when fold, a front display unit on the inner side and a rear display unit on the outer side. In the related art, the front display unit and the rear display unit are used for displaying advertisement.

As disclosed in Japanese Unexamined Patent Publication No. 2001-211270, it is possible to display advertisement by providing an advertising display section in a part of the front display unit, especially in the lower part. When using the portable telephone, however, although the front display unit is used when sending e-mail and using Internet, the essential purpose of using the portable telephone is to make a phone call. It is structured to use the receiver when making telephone calls so that the front display unit cannot be looked at when making a phone call. Therefore, even though advertisement is displayed using the front display unit, users cannot look at the advertisement contents so that the advertisement is not effectively achieved.

In the case of displaying advertisement using a rear display unit as disclosed in Japanese Unexamined Patent Publication No. 2002-182828, the advertisement contents are displayed constantly. Thus, it is considered that the effective advertisement is carried out. However, considering the psychology of human beings when paying attentions, it is necessary to provide some impacts for attracting one's attentions to the advertisement. For this, displaying advertisement constantly on the portable telephone is not considered to be very effective.

Also, it may be possible to increase the number of the advertisement media by using both the front display unit and the rear display unit of the portable telephone for increasing the opportunities to be seen by the users. However, even if such method is employed, it simply increases the opportunities of looking at the advertisement display, which only cause mannerism. In order to solve this, the cycle of changing the advertisement contents is to be shortened. However, it increases the cost for advertisement so that the significant effect of the advertisement display cannot be achieved.

### SUMMARY OF THE INVENTION

The object of the present invention is to provide an advertising method using mobile terminals, mobile terminal advertising system and a mobile terminal, which increases the advertising effect by giving an impact to the psychology of users so as to positively provide the users with the state to pay attentions to the displayed advertisement.

In order to achieve the foregoing objects, an advertising method using a mobile terminal according to the present invention comprises the steps of: receiving contents information for displaying advertisement from a content server; and displaying the received contents information for displaying advertisement by changing the display on a display unit of a mobile terminal using the display unit provided in the mobile terminal for displaying communication state as an advertising medium.

It is desirable to change the display of the information in accordance with the communication state of the mobile terminal. The information may be continuously displayed after changing the display of the information.

Further, the advertising method using the mobile terminal may comprise the steps of: calculating communication cost required for mobile terminal communication in order to receive and display the contents information for displaying advertisement; and performing reduction processing on communication fee based on the information on the calculated communication cost.

A mobile terminal advertising system for performing the advertising method using the mobile terminal according to the present invention is desirable to comprise: a contents server for providing contents information for displaying advertisement; a mobile terminal for receiving the contents information for displaying advertisement provided from the contents server; and an advertisement-propaganda mechanism for displaying advertisement on a display unit provided in the mobile terminal for displaying communication state as an advertising medium by changing the display of the contents information for displaying advertisement.

Further, the mobile terminal advertising system is desirable to comprise: a time managing unit equipped in the mobile terminal, for supervising accumulated time of the mobile terminal being used as an advertising medium; and a charging server for calculating communication fee of the mobile terminal being used as the advertising medium based on time information outputted from the time managing unit, in which the charging server is equipped with a function of performing the reduction processing on the communication fee so as to reduce the cost shared by the user.

A mobile terminal used in the mobile terminal system according to the present invention is desirable to comprise: a display unit used as an advertising medium; a time managing unit for supervising accumulated time of a mobile terminal being used as an advertising medium, a radio communication unit for receiving contents information for displaying advertisement from a contents server as well as outputting accumulated time information outputted from the time managing unit to the outside; and an advertisement-propaganda mechanism for displaying the contents information for displaying advertisement received in the radio communication unit by changing the display.

When a user turns on the power of a mobile terminal as a portable telephone and the like to start the display operation in the rear display unit, the contents for displaying advertisement provided by the advertiser (sponsor and the like) , which has been downloaded from mobile communication network to the mobile terminal, is displayed with change in the display unit of the mobile terminal. The display of the contents information for displaying advertisement is changed so that it enables to give an impact on the psychology of the mobile terminal users. This is only in the extent, for example, to induce recognition of the incoming e-mail to the mobile terminal by incoming-mail sound. Thus, it is not subliminal advertisement and does not give a bad influence to the psychological state of the users. For example, when an e-mail arrives at the mobile terminal, the user looks at the display unit and, at this time, the contents information for displaying advertisement is displayed in the display unit. Thus, the users are also to look at the contents information for displaying advertisement every time the e-mail arrives so that the advertising contents can be surely informed. This enables the advertisement to sufficiently carry out its role.

The mobile terminals are often used at public places. When the rear display unit is used as the advertising medium, a third party can read the advertisement so that it can be used as the advertising medium for providing the third party with the advertising information. The advertiser substantially shares a part of the communication fee bore by the user for advertising propaganda by, for example, paying a prescribed reward. Thereby, advertisement-propaganda business using mobile terminals is achieved. Also, the contents data of the advertisement provided by the advertiser can be downloaded from the contents server connected to the mobile communication network to the mobile terminal for updating the contents.

According to the present invention, by utilizing the mobile terminal for the advertisement-propaganda, the advertising telephone business comprising a subscriber of the mobile terminal system, advertiser, and portable telephone company and the like can be achieved.

### BRIEF DESCRIPTION OF THE DRAWINGS

FIG. 1 is an illustration showing the overall configuration of a system according to an embodiment of the present invention;
FIG. 2 is an illustration showing the structure of a portable telephone according to the embodiment of the present invention;
FIG. 3 shows examples of setting information provided by a display condition storing device of the portable telephone according to the embodiment of the present invention;

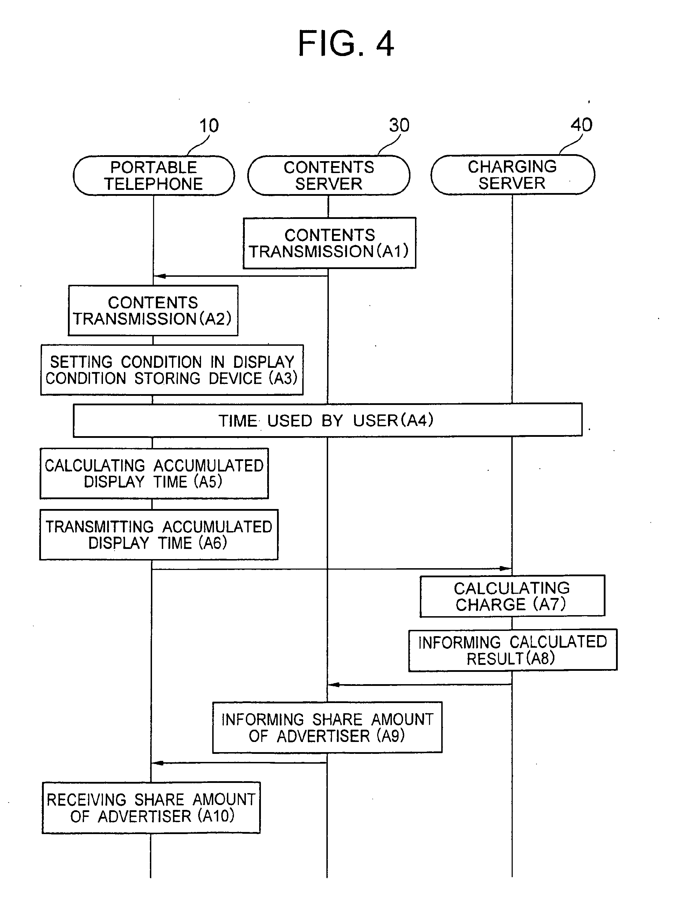

FIG. 4 is an illustration showing the operation sequence according to the embodiment of the present invention;
FIG. 5A is a perspective view showing the portable telephone in an open state used in the embodiment of the present invention while FIG. 5B is a perspective view showing the portable telephone in a closed state used in the embodiment of the present invention; and
FIG. 6 is a timing chart by which the contents information for displaying the advertisement is displayed in the portable telephone using the front display unit and/or rear display unit.

### DETAILED DESCRIPTION OF THE PREFERRED EMBODIMENTS

In the followings, preferred embodiments of the present invention will be described by referring to accompanying drawings.

### (Description of the Structure)

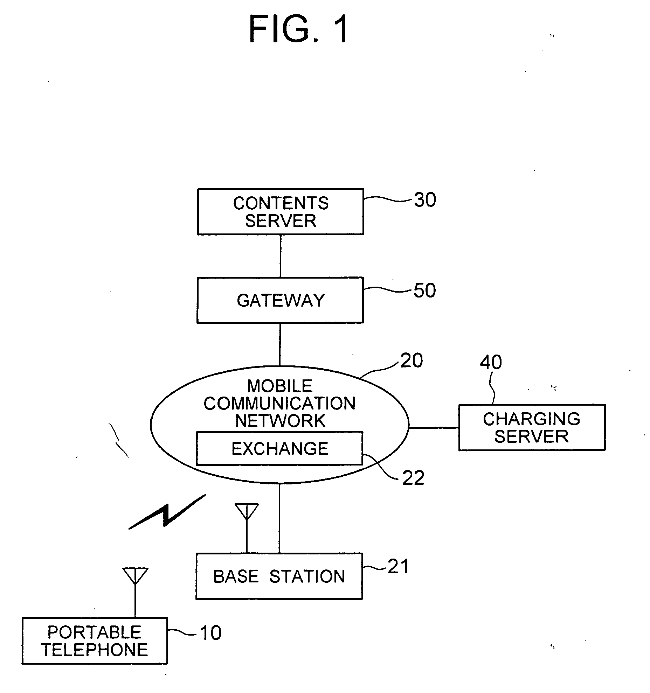

As shown in FIG. 1, a mobile terminal system according to an embodiment of the present invention comprises a portable telephone 10, a mobile communication network 20, a contents server 30, a charging server 40, and a gateway server 50. When using the mobile terminal system according to the embodiment of the present invention, it is necessary to exchange a contract beforehand between the advertiser (sponsor) and the mobile terminal user (party to a contract) on: usage of mobile terminal possessed by the user as an advertising medium; and the costs of using the terminal as the advertising medium such as advertising fee, communication cost, maintenance cost for the mobile terminal and the like.

In the embodiment of the present invention, the mobile terminal 10 is used as a portable telephone, and it is intended to increase the advertising effect by giving an impact on the psychological state of the users using the display unit of the portable telephone 10.

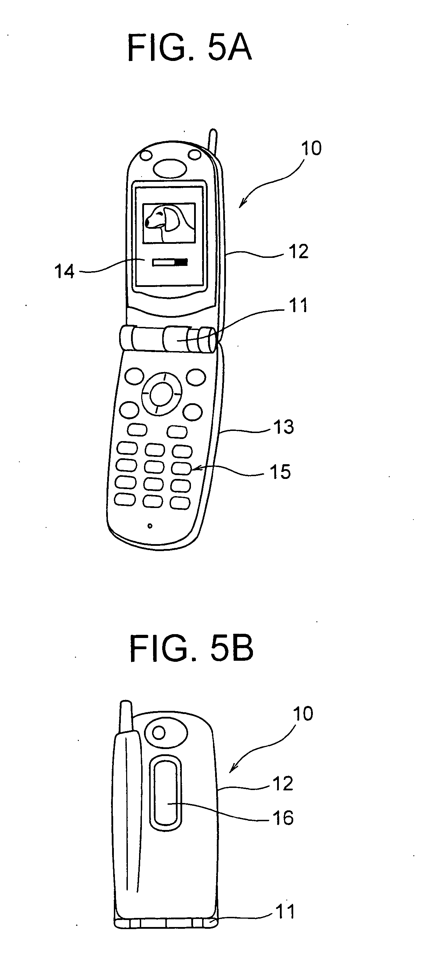

The portable telephone 10 as the mobile terminal, as shown in FIG. 5A and 5B, comprises a first casing 12 and a second casing 13 being connected to be capable of open-and-close via a hinge 11, a front display unit 14 and a rear display unit 16. The portable telephone 10 is used in the state where the first casing 12 and the second casing 13 are open. The front display unit 14 is used by opening the casings and is mounted on the inner face' side of the first casing 12. The front display unit 14 is formed of a liquid display and the like and displays necessary information thereon when using the portable telephone 10. The rear display unit 16 is mounted on the outer face side of the first casing 12. A various types of keys 15 are mounted in the inner face of the second casing 13 on the opposite side of the rear display unit 16 for inputting/outputting information necessary to provide communication service and display the advertisement. The rear display unit 16 is formed with a liquid display and the like and displays the necessary information during the standby time of the portable telephone 10. This type of portable telephone is generally called a fold-type portable telephone.

The mobile communication network 20 is a communication network for connecting the contents server 30, the charging server 40 and the portable telephone 10. The mobile communication network 20 comprises a base station 21 for performing radio communication in between the portable telephone 10 present in the radio cells and a line exchange 22 for controlling the communication line between the base station 21, the contents server 30 and the charging server 40.

The contents server 30 is connected to the mobile communication network 20 via the gateway 50. The contents server 30 stores the advertising contents (referred to as contents in the followings) from the clients of the advertisement and the like, such as the advertising information provided to the portable telephone 10. The contents information stored in the contents server 30 comprises movie-picture, still-picture, audio information and the like. The contents server 30 stores ID information such as the e-mail address and the telephone number of the portable telephone 10 which belongs to the subscriber. Based on the managed information, the contents server 30 supervises accesses from the user and outputs the contents date to the gateway 50 when the request for displaying advertisement is outputted through the access from the user who is a subscriber of the mobile terminal system according to the embodiment of the present invention. The gateway 50, when receiving the request of displaying the advertisement from the user' s portable telephone 10, outputs the request to the contents server 30. When the contents information for displaying the advertisement is outputted from the contents server 30, the gateway 50 outputs the contents information to the mobile communication network 20. When the contents information for displaying the advertisement is outputted from the gateway 50, the mobile communication network 20 outputs the information to the respective portable telephone 10.

The charging server 40 is connected to the mobile communication network 20 and counts the accumulated time of displaying the contents information for displaying the advertisement according to the history of displaying the contents information in the portable telephone 10. Based on the counted time, the charging server 40 calculates the amount to be paid to the subscriber for the advertising achievements (effects). Specifically, the charging server 40 determines the advertising achievements (effects) based on the accumulated time of displaying the advertisement on the user's portable telephone 10 and the display type by which the advertisement is displayed using the front display unit 14 and the rear display unit' 16. Based on the information on the advertisement achievements, the charging server 40 performs reduction processing which is to deduct the communication cost used for displaying the advertisement from the communication cost to be paid by the user so as to calculate the amount paid by the advertiser to the subscriber.

Further, the charging server 40 transmits the calculated amount to be paid to a processing server (not shown) for performing a transfer processing of the pay amount so as to request the transfer to the bank account of the subscriber. Also, the charging server 40 outputs the information on the amount to be paid to the subscriber in accordance with the use of advertisement to the contents server 30. The contents server 30 outputs the information to the portable telephone 10 via the gateway 50 and the mobile communication network 20 upon receiving the information on the pay amount from the charging server 40. The information on the amount paid from the advertiser to the subscriber may be directly outputted from the charging server 40 to the portable telephone 10 via the mobile communication network 20.

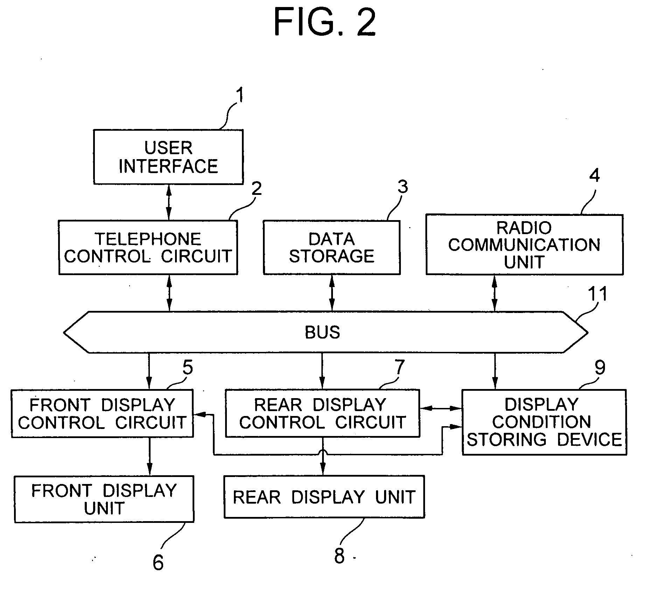

As shown in FIG. 2, the portable telephone 10 used in a mobile terminal system according to the embodiment of the present invention comprises, in the inner space between the first casing 12 and the second casing 13, a user interface 1, a telephone control circuit 2, a data storage 3, a radio communication unit 4, a front display control circuit 5, a front display unit 6, a rear display control circuit 7, a rear display unit 8, a display condition storing device 9, and a bus 11. The front display unit 6 is constituted by the front display unit 14 of the portable telephone 10 and the rear display unit 8 is constituted by the rear display unit 16 of the portable telephone 10. The front display unit 6 and the rear display unit 8 together constitute the display units as the advertising media. Also, the front display control circuit 5 and the rear display control circuit 7 constitute a time management unit for supervising the accumulated time of the portable telephone 10 being used as the advertising medium. Further, the telephone control circuit 2, the front display control circuit 5 and the rear display control circuit 7 constitute an advertisement-propaganda mechanism for displaying the contents information for displaying advertisement received in the radio communication unit with change in the front display unit.

The user interface 1 is mainly connected to the keys 15 such as a switch, ten keys and the like. When the input information such as various types of operations, e.g., menu selection of the portable telephone, dialing, outgoing/incoming calls, electronic mails, Web site, and condition input of whether or not the advertisement is to be displayed on the rear display unit 8, are inputted from the keys 15, the user interface 1 outputs the information inputted from the key 15 to the telephone control circuit 2.

The telephone control circuit 2 comprises a central processing unit (CPU) and has a control function for controlling the operation of each unit of the portable telephone 10 via the bus 11 by having the central processing unit execute the various programs. The telephone control circuit 2 controls the main functions of the portable telephone such as menu control, communication control, display control and the like according to the input information from the user interface 1.

The data storage 3 stores the information on each control program regarding the operations and the like of the CPU for achieving the functions of the portable telephone 10 as well as the contents information of the present invention. The data storage 3 reads the contents information for displaying the advertisement according to a command from the telephone control circuit 2 and writes the updated contents information for displaying advertisement over the last information contents for displaying advertisement.

The radio communication unit 4 has a function of exchanging information between with the base station 21 of the mobile communication network 20 through radio communication. The information by the radio communication exchanged in the radio communication unit 4 contains audio signals, the contents information for displaying advertisement and the like.

The radio communication unit 4, when receiving the contents information for displaying advertisement downloaded from the contents server 30, outputs the incoming history to the telephone control circuit 2 while retrieving the downloaded contents information for displaying the advertisement. The telephone control circuit 2 inputs the contents information for displaying the advertisement retrieved by the radio communication unit 4 into the data storage 3 via the bus 11 based on the information from the radio communication unit 4. The data storage 3 stores the contents information for displaying the advertisement which has been downloaded and retrieved according to the command from the telephone control circuit 2.

The front display control circuit 5 has a function of controlling the display of the front display unit 6 of the portable telephone 10. In the display control, the control function for displaying advertisement according to the present invention is added in addition to the general functions of the portable telephone such as the display control under the basic operation mode of the portable telephone, e.g., regular menu control, outgoing/incoming call display, electronic mail and Web site functions, game functions. Further, the front display control circuit 5 calculates the accumulated time of displaying the contents information for displaying the advertisement based on the display history of the contents information for displaying the advertisement being displayed on the front display unit 6 and supervises the information on the accumulated time. The front display control circuit 5 outputs the information on the supervised time to the radio communication unit 4 via the bus 11 according to the command from the telephone control circuit 2. The radio communication unit 4 has a function of transmitting the information on the supervised time outputted from the front display control circuit 5 to the contents server 30 by the control of the telephone control circuit 2. The radio communication unit 4 may transmit the information on the supervised time outputted from the front display control circuit 5 to the charging server 40 by the control of the telephone control circuit 2.

The rear display control circuit 7 has a function of controlling the display of the rear display unit 8 of the portable telephone 10. Specifically, the rear display control circuit 7 has a function of displaying the display information of the portable telephone 10 on the rear display unit 8 as well as switching the display on the front display unit 6 to the rear display unit 8 according to the operation mode of the portable telephone 10. Further, the rear display control circuit 7 has a function of displaying the contents information for displaying advertisement downloaded from the contents server 30 on the rear display unit 8.

Also, the rear display control circuit 7 calculates the accumulated time of displaying the contents information for displaying the advertisement based on the display history of the contents information for displaying the advertisement being displayed on the rear display unit 8 and supervise the information on the accumulated time. The rear display control circuit 7 outputs the information on the supervised time to the radio communication unit 4 via the bus 11 according to the command from the telephone control circuit 2.

The display condition storing device 9 has a function of storing the setting information for setting the advertisement display mode (display mode) for displaying the contents information for displaying the advertisement using the front display control circuit 6 and the rear display control circuit 8 according to the control of the telephone control circuit 2 upon receiving a command from the telephone control circuit 2 by the input operation from the user interface 1. Specifically, the display condition storing device 9, upon receiving the command from the telephone control circuit 2, displays the downloaded contents information for displaying the advertisement using either the front display unit 6 or the rear display unit 8, or both the front display unit 6 and the rear display unit 8 by making a selection.

The display condition storing device 9 may store the setting information for switching a first display condition in which the downloaded contents information for displaying the advertisement is displayed only on the rear display unit 6 and a second display condition in which the information is displayed on the front display unit 6 and the rear display unit 8, regardless of the operation mode of the portable telephone such as the menu control, incoming/outgoing call display, electronic mail and Web site functions, game function and the like. In this case, under the second display condition, the contents information for displaying the advertisement is displayed on either or both of the front display unit 6 and the rear display unit 8.

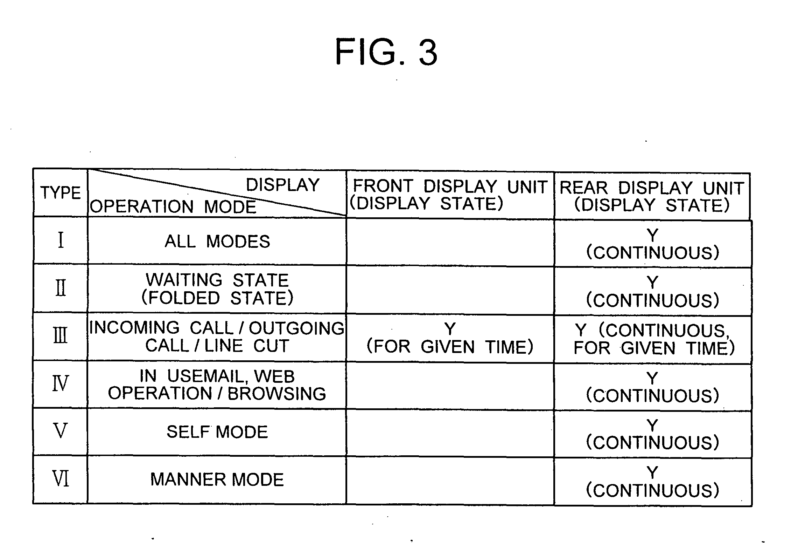

FIG. 3 shows an example of the display condition contained in the setting information stored in the display condition storing device 9. The example of display condition shown in FIG. 3 shows six display types I-VI. The operations of the portable telephone 10 of these types will be described.

The display type I shows the form of displaying the downloaded contents information for displaying the advertisement only on the rear display unit 8 in all the operation modes of the portable telephone 10. For performing display by the display type I, the user inputs the command of the display type I from the user interface 1 to the telephone control circuit 2 by operating the keys 15. The telephone control circuit 2, upon receiving the command from the user interface 1, inputs the rear display command to the display condition storing device 9. Then, the display condition storing device 9 outputs the rear display command to the rear display control circuit 7. On the other hand, upon receiving the input from the user interface 1, the telephone control circuit 2 reads out the contents information for displaying the advertisement downloaded from the information storage 3 and outputs the information to the rear display control circuit 7.

The rear display control circuit 7 continuously displays the downloaded contents information for displaying the advertisement on the rear display unit 8 (16) upon receiving the display command from the display condition storing device 9 and the contents information for displaying the advertisement from the data storage 3.

The display type II shows the form of displaying the downloaded contents information for displaying the advertisement only on the rear display unit 8 only in the standby state of the portable telephone 10. For performing display by the display type II, the user inputs the command of the display type II from the user interface 1 to the telephone control circuit 2 by operating the keys 15. The telephone control circuit 2, upon receiving the command from the user interface 1, inputs the rear display command to the display condition storing device 9. Then, the display condition storing device 9 outputs the rear display command to the rear display control circuit 7. On the other hand, upon receiving the input from the user interface 1, the telephone control circuit 2 reads out the contents information for displaying the advertisement downloaded from the information storage 3 and outputs the information to the rear display control circuit 7.

The rear display control circuit 7 continuously displays the downloaded contents information for displaying the advertisement on the rear display unit 8 (16) upon receiving the display command from the display condition storing device 9 and the contents information for displaying the advertisement from the data storage 3.

The display type III shows the form of displaying the downloaded contents information for displaying advertisement in the front display unit 6 (14) only in a specific time after the operations of incoming calls/outgoing calls/line cut is performed in the portable telephone 10. In this case, the downloaded contents information for displaying advertisement may be displayed in the rear display unit 8 (16) as in the front display unit 6 (14) only in a specific time after the operations of incoming calls/outgoing calls/line cut.

For performing display by the display type III, the user inputs the command of the display type III to the telephone control circuit 2 from the user interface 1 by operating the keys 15. The telephone control circuit 2, upon receiving the command from the user interface 1, inputs the front display command and the rear display command to the display condition storing device 9. Then, the display condition storing device 9 outputs the rear display command to the rear display control circuit 7 and front display command to the front display control circuit 5. On the other hand, the telephone control circuit 2, upon receiving the input from the user interface 1, reads out the contents information for displaying the advertisement downloaded from the data storage 3 and outputs the information to the front display control circuit 5 and the rear display control circuit 7, respectively.

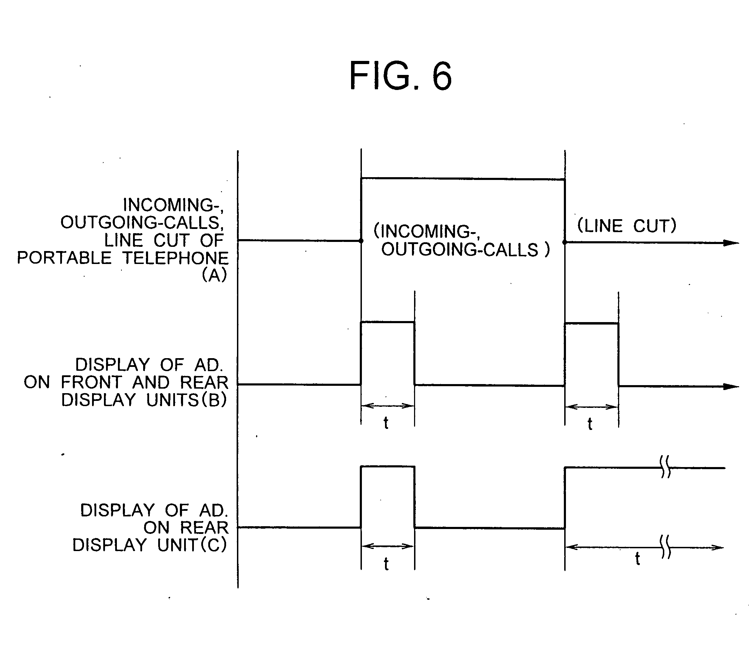

As shown in FIG. 6, the front display control circuit 5, upon receiving the display command from the display condition storing device 9 and the contents information for displaying the advertisement downloaded from the data storage 3, displays the downloaded contents information for displaying the advertisement on the front display unit 6 (14) within time t controlled by the telephone control circuit 2 (B).

As shown in FIG. 6, the rear display control circuit 7, upon receiving the display command from the display condition storing device 9 and the contents information for displaying the advertisement downloaded from the data storage 3, displays the downloaded contents information for displaying the advertisement on the rear display unit 8 (16) within time t controlled by the telephone control circuit 2 (B).

In this case, the telephone control circuit 2 monitors incoming calls, outgoing calls and line cut of the portable telephone 10 using the keys 15 and, when these operations are performed, outputs the display command using each operation of incoming call, outgoing call and line cut of the portable telephone 10 as a trigger. Further, the telephone control circuit 2 counts time by a timer (not shown) and outputs the display command within the set time t (A). As shown in FIG. 6, the telephone control circuit 2 may continuously display the contents information for displaying the advertisement on the rear display unit 8 using the rear display control circuit 7 by continuously outputting the rear display command after line cut.

In the display type III, the contents information for displaying the advertisement is displayed on the display unit of the portable telephone 10 carried by the user as the subscriber only in the specific time t at the time of performing operating outgoing calls, incoming calls, and line cut in the portable telephone. Specifically, the front display unit 6 and the rear display unit 8 display the contents information for displaying the advertisement using the incoming calls, outgoing calls and line cut of the portable telephone 10 as the trigger. The operation of the incoming calls, outgoing calls and line cut give the users reasons (impact) to actively communicate by the portable telephone 10 so that the users are in the psychological state to actively look at the display contents in the display units 6 and 8. The contents information for displaying the advertisement is to be contained in a part of the display in the display units 6 and 8. Thus, the contents information for displaying the advertisement is to give a strong impression on the user's mind. For the advertiser, this is very effective for making advertisement since the advertisement contents can be a strong appeal to the users.

The display type IV is the form of displaying the downloaded contents information for displaying the advertisement on the rear display unit 8 when making calls, operating e-mails/Web site, and browsing Web site on the portable telephone 10.

For performing display by the display type IV, the user inputs the command of the display type IV to the telephone control circuit 2 from the user interface 1 by operating the keys 15. The telephone control circuit 2, upon receiving the command from the user interface 1, inputs the rear display command to the display condition storing device 9. Then, the display condition storing device 9 outputs the rear display command to the rear display control circuit 7. On the other hand, the telephone control circuit 2, upon receiving the input from the user interface 1, reads out the contents information for displaying the advertisement downloaded from the data storage 3 and outputs the information to the rear display control circuit 7.

The rear display control circuit 7, upon receiving the display command from the display condition storing device 9 and the contents information for displaying the advertisement downloaded from the data storage 3, continuously displays the downloaded contents information for displaying the advertisement on the rear display unit 8 (16).

The display type V is a form of displaying the downloaded contents information for displaying the advertisement on the rear' display unit 8 in so-called a self-mode (a function provided by NTT Docomo Inc.) in which the communication function such as outgoing/incoming calls and the like of the portable telephone 10 is at rest.

For performing display by the display type V, the user inputs the command of the display type V to the telephone control circuit 2 from the user interface 1 by operating the keys 15. The telephone control circuit 2, upon receiving the command from the user interface 1, inputs the rear display command to the display condition storing device 9. Then, the display condition storing device 9 outputs the rear display command to the rear display control circuit 7. On the other hand, the telephone control circuit 2, upon receiving the input from the user interface 1, reads out the contents information for displaying the advertisement downloaded from the data storage 3 and outputs the information to the rear display control circuit 7.

The rear display control circuit 7, upon receiving the display command from the display condition storing device 9 and the contents information for displaying the advertisement downloaded from the data storage 3, continuously displays the downloaded contents information for displaying the advertisement on the rear display unit 8 (16).

The display type VI is a form of displaying the downloaded contents information for displaying the advertisement on the rear display unit 8 in a manner mode in which the communication funct'ion of the portable telephone 10 can be used but the incoming sound does not rumble.

For performing display by the type VI, the user inputs the command of the display type VI to the telephone control circuit 2 from the user interface 1 by operating the keys 15. The telephone control circuit 2, upon receiving the command from the user interface 1, inputs the rear display command to the display condition storing device 9. Then, the display condition storing device 9 outputs the rear display command to the rear display control circuit 7. On the other hand, the telephone control circuit 2, upon receiving the input from the user interface 1, reads out the contents information for displaying the advertisement downloaded from the data storage 3 and outputs the information to the rear display control circuit 7.

The rear display control circuit 7, upon receiving the display command from the display condition storing device 9 and the contents information for displaying the advertisement downloaded from the data storage 3, continuously displays the downloaded contents information for displaying the advertisement on the rear display unit 8 (16).

Described above is a relation between each form of the display types I-VI and the display state. These various display modes can be combined and, by the combination, the contents information for displaying the advertisement provided by the advertiser can be effectively presented to the users as the subscribers. Also, when it is in manner mode, the advertisement may be displayed only on the front display unit for suppressing the display of the advertisement to the third party. In any of the types, advertising sound from the speaker of the portable telephone 10 may also be presented in addition to the image displayed on the display units 6 and 8. Further, in the case where the surrounding of the portable telephone 10 is dark, e. g. , when at night or placed inside a bag or the like, the advertising display may be stopped by a control through an optical sensor provided in the portable telephone or by a schedule control for a night time.

Especially, under the control in each operation mode, it is possible to calculate the accumulated (display) time of the advertising contents being displayed by the front display control circuit 5 and the rear display control circuit 8 through considering the importance according to the advertising effects of each operation mode.

The operations according to the embodiment of the present invention will be described.

As a precondition for performing the operation sequence according to the embodiment of the present invention, a contract is exchanged between the advertising sponsor and the user (subscriber) of the portable terminal on display of the advertisement at the time of using the portable telephone and sharing the communication fee for displaying the advertisement.

The user inputs a request for displaying the advertisement provided by the advertiser to the contents server 30 via the mobile communication network 20 by operating the keys 15. The contents server 30, upon receiving the request for displaying the advertisement from the user, transmits the contents information for displaying the advertisement to the portable telephone 10 carried by the user as the subscriber (Step A1) . When the portable telephone 10 receives the contents information for displaying the advertisement in the radio communication unit 4, the telephone control circuit 2 has the data storage 3 store the contents information for displaying the advertisement received in the radio communication unit 4 (Step A2).

Let' s assume that the user selects the display type I shown in FIG. 3. When the user inputs the display command of the display type I by operating the keys 15, the telephone control circuit 2 outputs the display command to the display condition storing device 9 via the bus 11 (Step A3).

Then, the display condition storing device 9 outputs the display command to the front display control circuit 5 and/or the rear display control circuit 7. On the other hand, upon receiving the input from the user interface 1, the telephone control circuit 2 reads out the contents information for displaying the advertisement downloaded from the data storage 3 and outputs the information to the front display control circuit 5 and/or the rear display control circuit 7. As shown in FIG. 6, the front display control circuit 5 and/or the rear display control circuit 7, upon receiving the display command from the display condition storing device 9 and the contents information for displaying the advertisement from the data storage 3, displays the downloaded contents information for displaying the advertisement on the front display unit 6 and/or the rear display unit 8 (16) within a time t (a period of time used by the user) controlled by the telephone control circuit 2 (Step A4). When the user sets the display condition of prescribed contents to be the type for performing the rear display in all the modes, the downloaded contents information for displaying the advertisement is to be displayed on the rear display unit 8 when using the portable telephone 10 (Step A4) .

At this time, the subscriber is using the portable telephone through the front display unit 6 in a given operation mode in the public places or the like, and the rear display unit 8 provided on the rear face is to be looked at by a third party. Thereby, the advertising effect can be achieved.

When the user displays the contents information for displaying the advertisement provided by the advertiser on the front display unit 6 and/or the rear display unit 8, the time of displaying the contents information for displaying the advertisement on the front display unit 6 and/or the rear display unit 8 is supervised by the front display control circuit 5 and/or the rear display control circuit 7. The front display control circuit 5 and/or the rear display control circuit 7 counts the accumulated display time of the contents information for displaying the advertisement by referring to the history of the contents information for displaying the advertisement being displayed by the user on the front display unit 6 and/or the rear display unit 8 (Step A5). The front display control circuit 5 and/or the rear display control circuit 7 outputs the information on the display time totaled by a prescribed period of time for displaying the advertisement, e.g., by a week or a month, to the radio communication unit 4 by the control of the telephone control circuit 2. The radio communication unit 4, upon receiving the information on the display time from the front display control circuit 5 and/or the rear display control circuit 7, outputs the information to the charging server 40 via the mobile communication network 20 (Step A6). The radio communication unit 4 may output the supervised time information to the charging server 40 via the contents server 30.

The charging server 40 calculates the communication fee of the mobile terminal which is the amount of the portable telephone 10 being used as the advertising medium based on the information on the accumulated display time received from the portable telephone 10. Further, based on the information on the advertisement, the charging server 40 performs reduction processing for deducting the communication fee used for displaying the advertisement from the communication fee to be bore by the user so as to determine the amount paid by the advertiser to the subscriber. The charging server 40 transmits the amount paid by the advertiser to the subscriber to a processing server (not shown) as the transfer amount to the user as the subscriber in order to request the transfer to the bank account of the subscriber (Step A7). The charging server 40 outputs the information on the transfer amount to be bore by the advertiser to compensate the user for cooperating to display the advertisement (Step A8).

The contents server 30 provides the portable telephone 10 of the subscriber with the information on the amount of transfer to be bore by the advertiser via the mobile communication network 20 when receiving the transfer amount from the charging server 40 (Step A9).

The user as the subscriber receives the information on the transfer amount to be bore by the advertiser in the portable telephone 10 (Step A10). The user recognizes the amount deducted from the communication fee as a compensation for displaying the contents information for displaying the advertisement by referring to the received transfer amount to be bore by the advertiser.

### (Another Embodiment)

The above-described embodiment shows an example of configuration in which the rear display is performed in all the operation modes or by each operation mode. However, it is possible to have the configuration in which the advertisement is displayed in only a plurality of specific operation modes. For example, there is a case where the communication by radio terminals is prohibited in the public places. Thus, by the functions of self mode and the like, it is possible to: display the advertising contents only in the case where the portable telephone is set to have no communication; display the advertising contents only in the case when the sound from the speaker of the portable telephone is set to be silent by providing manner mode to be used in the public places; and the like. Further, the payment to the subscriber for displaying the advertisement is to be determined by counting the specific accumulated time of the advertising display in the subscription time, however, it is possible to charge by flat-rate.

Also, the portable telephone is used as the mobile terminal, however, it is not limited to this. As the mobile terminals, it is also possible to apply the invention to a PHS, a portable radio device, and a communication PDA and the like.

As described above, in the present invention, there are variations in display of the contents information for displaying the advertisement. Thus, it gives an impact on the psychological state of the users of the mobile terminals, making them pay attention to the contents of the displayed advertisement. Thereby, the contents information for displaying the advertisement becomes widely available to the users of the mobile terminal where the advertisement is displayed and to the third parties nearby. Therefore, the contents information for displaying the advertisement provided by the advertiser can be effectively transmitted using the mobile terminals as the advertising media for achieving effective advertisement.

Further, by utilizing the characteristics of the mobile terminal such as the incoming calls, outgoing calls and line cut operations, it is possible to make the users recognize the advertisement to be displayed, thereby increasing the effect of the advertisement.

## Claims

1. An advertising method using a mobile terminal, comprising the steps of:
receiving contents information for displaying advertisement from a content'server by a mobile terminal; and
displaying the received contents information for displaying advertisement by changing a display on a display unit of a mobile terminal using the display unit equipped in the mobile terminal for displaying communication state as an advertising medium.

2. The advertising method using the mobile terminal as claimed in claim 1, wherein display of the information is changed in accordance with the communication state of the mobile terminal.

3. The advertising method using the mobile terminal as claimed in claim 1, wherein the information is continuously displayed after changing the display of the information.

4. The advertising method using the mobile terminal as claimed in claim 1, further comprising the steps of:
calculating communication cost required for mobile terminal communication in order to receive and display the contents information for displaying advertisement; and
performing reduction processing on communication fee based on the information on the calculated communication cost.

5. A mobile terminal advertising system, comprising:
a contents server for providing contents information for displaying advertisement;
a mobile terminal for receiving the contents information for displaying advertisement provided from the contents server; and
an advertisement-propaganda mechanism for displaying advertisement on a display unit equipped in the mobile terminal for displaying communication state as an advertising medium by changing a display of the contents information for displaying advertisement.

6. The mobile terminal advertising system as claimed in claim 5, further comprising:
a time managing unit equipped in the mobile terminal, for supervising accumulated time of the mobile terminal being used as an advertising medium;
a charging server for calculating communication fee of the mobile terminal being used as the advertising medium based on time information outputted from the time managing unit, wherein
the charging server is provided with a function of performing the reduction processing on the communication fee.

7. A mobile terminal comprising:
a display unit used as an advertising medium;
a time managing unit for supervising accumulated time of a mobile terminal being used as an advertising medium,
a radio communication unit for receiving contents information for displaying advertisement from a contents server as well as outputting accumulated time information outputted from the time managing unit to the outside; and
an advertisement-propaganda mechanism for displaying the contents information for displaying advertisement received in the radio communication unit by changing a display.
